# FASCICULE DE BREVET EUROPEEN

(11) **EP 3 333 450 B1**
(45) Date de publication et mention de la délivrance du brevet: **22.05.2019**
(21) Numéro de dépôt: 17290154.8
(22) Date de dépôt: 28.11.2017
(51) Int. Cl.: F16F 15/32, F42B 10/02

(54) **ENSEMBLE D'ÉQUILIBRAGE À BAGUES D'ÉQUILIBRAGE POUR MISSILE ET MISSILE POURVU D'UN TEL ENSEMBLE D'ÉQUILIBRAGE**
AUSWUCHTVORRICHTUNG MIT WUCHTRINGEN FÜR EINE RAKETE UND RAKETE MIT EINER SOLCHEN AUSWUCHTVORRICHTUNG
BALANCING DEVICE WITH BALANCING RINGS FOR A MISSILE AND MISSILE WITH SUCH A BALANCING DEVICE

(30) Priorité: 08.12.2016 FR 1601750
(43) Date de publication de la demande: 13.06.2018
(73) Titulaire: MBDA France, 92350 Le Plessis-Robinson (FR)
(72) Inventeur: Bourdillon, Rémi, 92350 Le Plessis Robinson (FR); Reisch, François, 92350 Le Plessis Robinson (FR); Guibout, Vincent, 92350 Le Plessis Robinson (FR)
(74) Mandataire: Gevers & Orès

(56) Documents cités:
- WO-A1-94/16852
- WO-A1-95/26258
- WO-A1-96/41113
- WO-A1-2013/144460
- DE-A1-102011 102 315
- GB-A- 549 189

## Description

La présente invention concerne un ensemble d'équilibrage pour un missile et un missile pourvu d'un tel ensemble d'équilibrage.

Dans le cadre de la présente invention, on entend par missile tout engin volant présentant une structure externe en partie cylindrique et pourvu de moyens de propulsion, et qui est de préférence guidé. Bien que non exclusivement, la présente invention se rapporte plus particulièrement à des missiles tactiques.

On sait que, dans un certain nombre d'utilisations, il est indispensable de maîtriser avec précision la position radiale du centre de gravité d'un tel missile. Généralement, les solutions usuelles pour ce faire consistent à fixer des masses ponctuelles, sur les structures, en fonction du besoin d'équilibrage individuel de chaque missile.

Ainsi, il est connu d'équilibrer le missile à l'aide de masselottes métalliques compactes, massives et pesantes, ces masselottes étant fixées sur le missile, par boulonnage par exemple.

Une telle procédure connue d'équilibrage d'un missile est longue et complexe, car elle est manuelle et itérative. De plus, elle est potentiellement dangereuse, car elle expose le personnel de production pendant un temps important au missile actif. Par ailleurs, lors de la détonation de la charge du missile ou lors de l'éclatement accidentel du propulseur du missile, ces masselottes d'équilibrage compactes sont projetées en tous sens. Aussi, en fonction du lien de détonation de la charge, la projection de ces éclats peut causer des dommages collatéraux (tireur, poste de tir, ...).

Par ailleurs, par le document FR-2 644 937, on connaît des masselottes d'équilibrage pour un missile tactique pouvant tourner autour de son axe longitudinal. Ces masselottes d'équilibrage ont pour objet de simplifier la procédure d'équilibrage du missile tactique en roulis, en évitant l'utilisation d'outils dangereux et en interdisant aux masselottes d'équilibrage de pouvoir se transformer en projectiles dangereux. Pour ce faire, chaque masselotte d'équilibrage est constituée par de la grenaille qui est enfermée dans un emballage clos. Sous l'effet de la détonation d'une charge ou d'un éventuel éclatement du propulseur, l'emballage de la grenaille est désagrégé et la grenaille forme une gerbe de faible énergie, à cause de la petitesse et de la dispersion des grains. Les masselottes ne peuvent donc pas se transformer en projectiles dangereux.

En outre, le missile tactique est pourvu d'alvéoles aptes à recevoir les masselottes d'équilibrage. De telles alvéoles sont, de préférence, pratiquées dans la face interne d'au moins un capot aérodynamique dudit missile. En variante, les alvéoles peuvent être accessibles de l'extérieur, à travers des fenêtres qui sont éventuellement obturées après mise en place des masselottes d'équilibrage.

Cette solution qui permet de réduire les effets collatéraux nécessite toutefois une certaine durée de mise en place des masselottes.

Plus globalement, les solutions usuelles d'équilibrage nécessitent donc d'ajouter à chaque missile, en fonction du besoin, une ou plusieurs masselottes d'équilibrage sur les structures. Cette opération d'équilibrage nécessite généralement de démontrer une partie du missile. De plus, l'ajout de ces masselottes génère une variation de masse et de centrage d'un missile à l'autre, et donc de performances. En outre, la trajectoire de ces masselottes, après impact, n'est en général pas maîtrisée. Par ailleurs, la mise en place de telles masselottes d'équilibrage est généralement réalisée tronçon par tronçon, ce qui nécessite un temps de montage relativement long.

Par ailleurs, on connaît :
- par le document GB - 549 189, un système d'équilibrage dynamique pour hélices
- par le document WO 2013/144460 A1, un misile;
   et
- par le document WO - 95/26258, un outil rotatif pourvu de bagues d'équilibrage.

La présente invention concerne un missile pourvu d'un ensemble d'équilibrage, qui permet de remédier aux inconvénients précités.

Selon l'invention, l'ensemble d'équilibrage comporte deux bagues d'équilibrage destinées à être montées sur le missile, chacune desdites bagues d'équilibrage comportant un lest qui est localisé sur la bague d'équilibrage correspondante, chacune desdites bagues d'équilibrage étant apte à être entraînée en rotation et à être fixée dans une position angulaire donnée.

Ainsi, grâce à l'invention, on agence sur le missile, deux bagues d'équilibrage rotatives à lestage excentrique, dont les positions angulaires autour de l'axe longitudinal peuvent être réglées de manière à corriger le balourd statique naturel d'équilibrage du missile. Ce réglage de la position angulaire (autour de l'axe longitudinal) des deux bagues d'équilibrage est possible de l'extérieur du missile, sans démontage des structures, comme précisé ci-dessous.

Par conséquent, grâce à l'invention, on obtient un ensemble d'équilibrage permettant de régler la position radiale du centre de gravité du missile, sans modifier sa masse et son centrage longitudinal, et sans avoir à réaliser de démontage au moment de l'opération (ou procédé) d'équilibrage, ce qui facilite cette opération d'équilibrage.

Dans un mode de réalisation préféré, chacune desdites bagues d'équilibrage comporte un anneau réalisé en un premier matériau présentant une première densité, et le lest est intégré dans cet anneau et est réalisé en un second matériau, par exemple en tungstène, présentant une seconde densité qui est supérieure à ladite première densité. De préférence, pour chacune desdites bagues d'équilibrage, le lest est intégré dans un tronçon en arc de cercle de l'anneau. Avantageusement, le lest est fixé, de préférence collé, dans l'anneau.

Par ailleurs, dans un mode de réalisation préféré, ledit lest comporte de la grenaille qui est enrobée dans une résine. Ce mode de réalisation préféré permet d'éviter que le lest ne devienne un projectile dangereux, en cas de détonation de la charge notamment, la résine se désagrégeant sous la détonation de la charge.

Avantageusement, chacune desdites bagues d'équilibrage est pourvue d'une graduation angulaire périphérique, ledit lest étant agencé à une position angulaire donnée par rapport à ladite graduation angulaire. De préférence, les deux bagues d'équilibrage sont agencées coaxialement, l'une à côté de l'autre, avec leurs graduations angulaires se faisant face.

En outre, dans un mode de réalisation avantageux, chacune desdites bagues d'équilibrage est pourvue d'un ensemble de trous de réglage répartis autour de la périphérie de l'anneau correspondant.

Selon l'invention, ledit missile est pourvu d'un ensemble d'équilibrage tel que celui décrit ci-dessus, les bagues d'équilibrage dudit ensemble d'équilibrage étant montées sur le missile coaxialement à un axe longitudinal dudit missile de manière à pouvoir être entraînées en rotation autour de cet axe longitudinal.

Dans un premier mode de réalisation, l'ensemble d'équilibrage est monté sur une face du missile, radialement externe par rapport à l'axe longitudinal dudit missile et est directement accessible de l'extérieur.

En outre, dans un second mode de réalisation, l'ensemble d'équilibrage est monté à l'intérieur d'une structure externe du missile, ladite structure externe étant pourvue d'au moins une fenêtre permettant d'accéder de l'extérieur à au moins une partie de chacune des bagues d'équilibrage.

Avantageusement, le missile comporte également des moyens de fixation configurés pour immobiliser en rotation chacune desdites bagues d'équilibrage dans une position angulaire donnée.

La présente invention concerne, en outre, un procédé d'équilibrage d'un missile tel que celui précité. Selon l'invention, ledit procédé d'équilibrage comporte les étapes successives suivantes :
- une première étape de mesure consistant à placer le missile sur un banc d'équilibrage pourvu de trois points de mesure, dans une première position, et à mesurer, dans cette première position, des premières valeurs de poids dudit missile mesurées, respectivement, auxdits trois points de mesure ;
- une seconde étape de mesure consistant à tourner le missile de 90° autour de son axe longitudinal par rapport à la première position pour l'amener dans une seconde position sur le banc d'équilibrage, et à mesurer, dans cette seconde position, des secondes valeurs de poids dudit missile mesurées, respectivement, auxdits trois points de mesure ;

- une première étape de calcul consistant à calculer, à partir des premières et secondes valeurs de poids mesurées auxdites première et seconde étapes de mesure, des coordonnées dans un plan transversal du centre de gravité du missile ;
- une deuxième étape de calcul consistant à calculer, à partir des coordonnées du centre de gravité et de positions angulaires prédéterminées des deux bagues d'équilibrage, pour chacune desdites bagues d'équilibrage une position angulaire de réglage, permettant de positionner le centre de gravité dans une zone prédéterminée dans le plan transversal (du missile) ; et
- une étape de réglage consistant à amener chacune des deux bagues équilibrage dans sa position angulaire de réglage ainsi calculée.

Avantageusement, le procédé d'équilibrage comporte, de plus, une étape de vérification mise en oeuvre après l'étape de réglage et consistant à vérifier, en mettant en oeuvre les première et seconde étapes de mesure et les première et seconde étapes de calcul, si le positionnement du centre de gravité est situé dans une zone prédéterminée dans un plan transversal du missile, et dans la négative, à refaire un réglage en mettant en oeuvre l'étape de réglage.

Des étapes du procédé, notamment l'étape de rotation du missile et l'étape de réglage, peuvent être réalisées au moins en partie de façon manuelle. Toutefois, dans un mode de réalisation préféré, l'ensemble desdites étapes du procédé est mis en oeuvre de façon automatique.

Les figures du dessin annexé feront bien comprendre comment l'invention peut être réalisée. Sur ces figures, des références identiques désignent des éléments semblables.
La figure 1 montre schématiquement, en perspective, un exemple de missile tactique, auquel est appliquée la présente invention.
La figure 2 est une vue, en perspective, de deux bagues d'équilibrage d'un ensemble d'équilibrage.
La figure 3 est une vue, en perspective, d'une variante de réalisation d'un ensemble d'équilibrage monté sur un tronçon d'un missile.
La figure 4 montre schématiquement une variante de réalisation d'un lest d'une bague d'équilibrage.
Les figures 5 et 6 montrent deux étapes particulières successives d'un procédé d'équilibrage du missile qui est monté sur un banc d'équilibrage, respectivement dans deux positions différentes.
La figure 7 est le schéma synoptique d'un procédé d'équilibrage d'un missile pourvu d'un ensemble d'équilibrage conforme à l'invention.

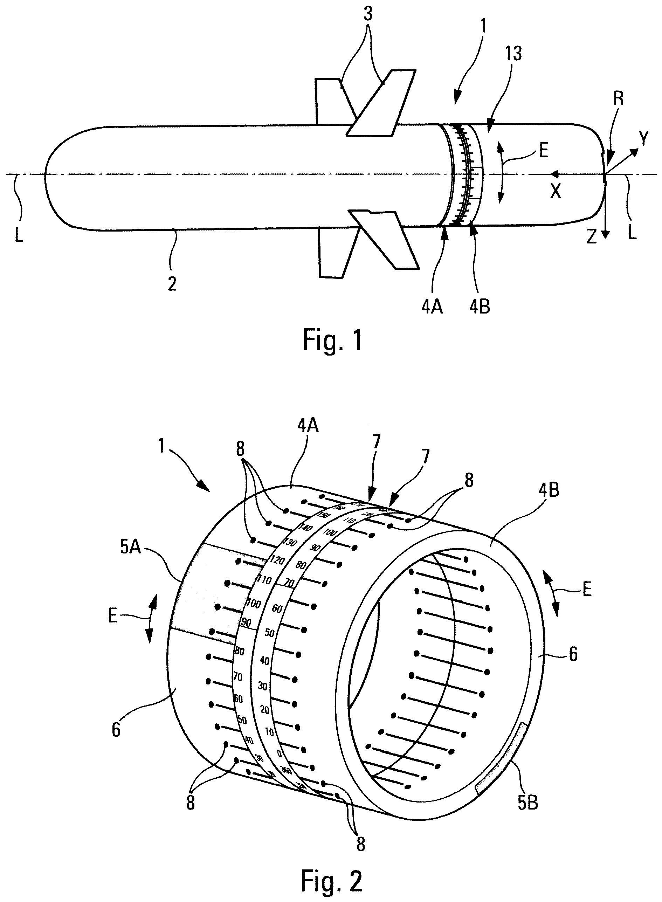

Le missile 2, représenté à titre d'exemple sur la figure 1, auquel est appliquée la présente invention, comporte des ailes (ou ailettes) 3 pour son guidage, ou bien pour sa mise en rotation autour de son axe longitudinal L - L dans le cas d'un missile tournant autour de son axe longitudinal.

Dans la description suivante, on utilise un repère R associé au missile 2 et défini selon trois axes, à savoir un axe X qui est orienté suivant ledit axe longitudinal L - L vers l'avant du missile 2, et deux axes Y et Z qui définissent un plan transversal YZ qui est orthogonal audit axe X.

La présente invention peut être appliquée à tout type de missile 2. Ce missile 2 est pourvu d'un ensemble d'équilibrage 1.

Selon l'invention, l'ensemble d'équilibrage 1 comporte deux bagues d'équilibrage 4A et 4B destinées à être montées sur le missile 2. Comme représenté sur la figure 2, chacune desdites bagues d'équilibrage 4A et 4B comporte un lest 5A, 5B qui est localisé sur une zone réduite de la bague d'équilibrage 4A, 4B correspondante.

Chacune desdites bagues d'équilibrage 4A et 4B est configurée pour pouvoir être entraînée en rotation et être fixée dans une position angulaire donnée.

Plus précisément, les bagues d'équilibrage 4A et 4B sont montées sur le missile 2, coaxialement à son axe longitudinal L - L, de manière à pouvoir être entraînées en rotation autour de cet axe longitudinal L - L, comme illustré par des doubles flèches E sur les figures 1 et 2.

Dans le cadre de la présente invention, l'ensemble d'équilibrage 1 comporte un système de rotation (non représenté), apte à permettre la rotation des bagues équilibrage 4A et 4B. Il peut s'agir de tout système apte à générer une telle rotation. À titre d'illustration, ce système de rotation peut comporter, pour chaque bague d'équilibrage, un ou plusieurs rails circulaires montés sur le missile, ainsi que des moyens associés permettant de déplacer la bague d'équilibrage sur ce ou ces rails.

Dans un mode de réalisation préféré, comme on peut le voir à plus grande échelle sur la figure 2, chacune des bagues d'équilibrage 4A et 4B comporte un anneau 6 réalisé en un premier matériau présentant une première densité. Le lest 5A, 5B est intégré dans cet anneau 6. De plus, il est réalisé en un second matériau, par exemple du tungstène, qui présente une seconde densité qui est supérieure à ladite première densité.

Cette seconde densité est, de préférence, au moins 150 fois supérieures à la première densité. À titre d'illustration non limitative, le premier matériau dans lequel est réalisé l'anneau 6 peut, notamment, être un matériau thermoplastique, une mousse polypropylène expansée, ou une mousse polyméthacrylate.

On obtient ainsi, grâce à ce premier matériau, des bagues d'équilibrage 4A et 4B globalement légères permettant de ne pas générer un poids supplémentaire important et désavantageux, excepté pour le lest 5A, 5B qui est plus lourd de manière à pouvoir remplir efficacement son rôle de lestage.

Pour chacune des bagues d'équilibrage 4A et 4B, le lest 5A, 5B est intégré et fixé dans un tronçon en arc de cercle de l'anneau 6. Dans un mode de réalisation particulier, le lest 5A, 5B est collé dans l'anneau 6.

Ainsi, par cet agencement du lest 5A, 5B dans une zone localisée (ou partie ou tronçon de taille réduite) de l'anneau 6, on obtient une bague d'équilibrage 4A, 4B présentant une répartition de masse non homogène avec un lestage excentrique localisé, dont la position est connue sur l'anneau 6.

Chacune des bagues d'équilibrage 4A, 4B est pourvue d'une graduation angulaire 7 périphérique, agencée autour de toute la périphérie de la bague d'équilibrage 4A, 4B. Cette graduation angulaire 7 est munie de repères positionnés par exemple de 10° en 10°. Le lest 5A, 5B est agencé à une position angulaire donnée par rapport à cette graduation angulaire 7, à titre d'exemple entre des valeurs d'environ 80° et 120° pour le lest 5A de la figure 2.

Dans le mode de réalisation préféré représenté sur les figures 1 et 2, les deux bagues d'équilibrage 4A et 4B sont agencées coaxialement l'une à côté de l'autre avec leurs graduations angulaires 7 se faisant face, ce qui permet notamment de faciliter le réglage et de réduire l'encombrement.

En outre, dans un mode de réalisation particulier, chacune des bagues d'équilibrage 4A et 4B est pourvue d'un ensemble de trous de réglage 8 répartis autour de la périphérie de l'anneau 6 correspondant, comme représenté sur la figure 2. Les trous de réglage 8 d'une bague d'équilibrage 4A, 4B permettent à un opérateur d'agir sur la bague d'équilibrage 4A, 4B, par exemple à l'aide d'un stylet qui est introduit dans un trou de réglage 8 et qui est déplacé pour faire tourner la bague de réglage 4B, 4B.

Dans ce mode de réalisation particulier, la mise en rotation est réalisée par pas, chaque pas de rotation étant égal à l'écartement angulaire entre deux trous de réglage 8 successifs, par exemple 10°.

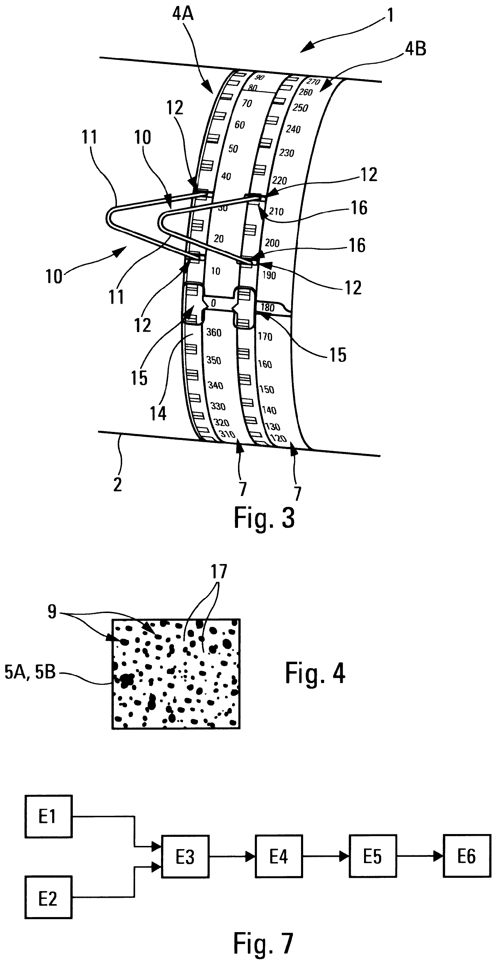

Par ailleurs, dans un mode réalisation particulier, représenté sur la figure 4, le lest 5A, 5B comporte de la grenaille 9, c'est-à-dire qu'il est fragmenté. Cette grenaille 9 qui présente une granulométrie réduite, est enrobée dans une résine 17. Ce mode de réalisation particulier permet d'éviter que le lest 5A, 5B ne devienne un projectile dangereux, en cas de détonation de la charge du missile notamment. En effet, le lest 5A, 5B ainsi formé de grenaille se disloque lors de la détonation de la charge en une gerbe d'éclats de moindre taille et donc de faible énergie, ce qui permet d'éviter ou tout au moins de réduire les effets collatéraux.

Le missile 2 comporte également des moyens de fixation 10 configurés pour immobiliser en rotation chacune desdites bagues d'équilibrage 4A, 4B dans une position angulaire donnée.

Ces moyens de fixation 10 peuvent comporter des agrafes, des vis ou des pions par exemple, qui sont insérés dans des trous ou encoches prévues dans les bagues d'équilibrage 4A et 4B pour les bloquer en rotation.

Sur l'exemple de la figure 3, on a représenté, comme moyens de fixation 10, une agrafe de fixation 11, pour chacune des bagues d'équilibrage 4A et 4B, qui est destinée à fixer en position la bague d'équilibrage 4A, 4B correspondante afin de l'empêcher de tourner. Dans l'exemple représenté, chaque agrafe de fixation 11 comprend deux branches assemblées en forme de V, et elle pénètre avec les extrémités libres de ces branches dans deux trous 12 pratiqués dans la bague de fixation 4A, 4B. Ces trous 12 peuvent être des trous dédiés à la fixation.

Toutefois dans un mode de réalisation préféré, ces trous 12 sont des trous de réglage, tels que les trous de réglage 8 représentés sur la figure 2, et sont donc également destinés à permettre à une prise, via un outil tel qu'un stylet, pour permettre à un opérateur de faire tourner la bague d'équilibrage 4A, 4B.

Ainsi, grâce à l'invention, on agence sur le missile 2, deux bagues d'équilibrage 4A et 4B rotatives à lestage excentrique, dont les positions angulaires respectives autour de l'axe longitudinal L - L peuvent être réglées de manière à corriger le balourd statique naturel d'équilibrage du missile 2. La correction est obtenue en amenant les deux lests 5A et 5B à des positions angulaires pour lesquelles leurs masses respectives déplacent le centre de gravité du missile dans le plan transversal YZ pour l'amener au centre, c'est-à-dire sur l'axe longitudinal L - L, ou tout au moins à une distance maximale acceptable de cet axe longitudinal. A titre d'exemple, si le missile ne présente pas de balourd statique naturel, les deux bagues d'équilibrage 4A et 4B sont positionnées en rotation pour amener les deux lests 5A et 5B sur un même diamètre du corps du missile, de part et d'autre du centre, afin que leurs effets respectifs sur le centre de gravité se compensent et ne déplacent pas le centre de gravité.

Ce réglage de la position angulaire (autour de l'axe longitudinal L - L) des deux bagues d'équilibrage 4A et 4B est possible de l'extérieur du missile 2, sans démontage des structures, comme précisé ci-dessous.

Par conséquent, grâce à l'invention, on obtient un ensemble d'équilibrage 1 permettant de régler la position radiale (dans le plan transversal YZ) du centre de gravité du missile 2 pour l'approcher du centre dudit missile 2, et ceci :
- sans modifier sa masse, puisque les bagues d'équilibrage 4A et 4B sont ' montées lors de la fabrication du missile 2 et qu'aucune masse supplémentaire n'est ajoutée pour réaliser le réglage ;
- sans modifier son centrage longitudinal (selon l'axe X), puisque les rotations des bagues d'équilibrage 4A et 4B entraînent des déplacements des lests 5A et 5B dans le plan transversal YZ mais pas selon l'axe longitudinal, chaque lest 5A, 5B étant maintenu dans la même position longitudinale (selon l'axe X) ; et
- sans avoir à réaliser de démontage au moment de l'opération d'équilibrage, ce qui facilite le réglage.

Dans le mode de réalisation représenté sur les figures 1 et 2, l'ensemble d'équilibrage 1 est monté sur une face 13 du missile 2, qui est radialement externe par rapport à l'axe longitudinal L - L dudit missile 2. Les bagues d'équilibrage 4A et 4B sont donc directement accessibles de l'extérieur pour le réglage et la fixation notamment.

En outre, en variante, l'ensemble d'équilibrage 1 peut être monté à l'intérieur d'une structure externe 14 du missile 2, comme représenté sur la figure 3. La structure externe 14 du missile 2, qui est représentée en transparence sur la figure 3, est alors pourvue de fenêtres 15 et 16 obtenues, par exemple, par une découpe dans cette structure externe 14. Ces fenêtres 15 et 16 permettent d'accéder de l'extérieur à des parties de chacune des bagues d'équilibrage 4A et 4B pour leur mise en rotation (fenêtre 15) et leur fixation (les fenêtres 16 permettant d'accéder aux trous 12 notamment).

L'ensemble d'équilibrage 1, tel que décrit ci-dessus, permet d'utiliser des pièces identiques (bagues d'équilibrage) quel que soit le missile sur lequel il est monté, et ces pièces sont mises en place dans le missile avant le réglage de l'équilibrage, ce qui constitue un gain substantiel en production (avec un temps d'intégration réduit).

L'ensemble d'équilibrage 1, tel que décrit ci-dessus, permet donc, par un réglage adéquat des bagues d'équilibrage 4A, 4B pourvues chacune d'un lest localisé 5A, 5B, d'équilibrer efficacement le missile 2.

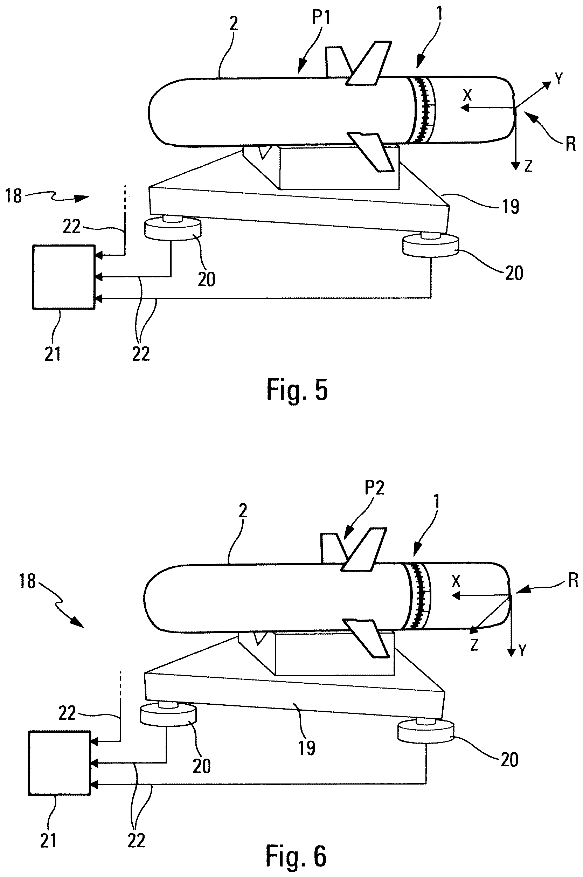

Le réglage de l'équilibrage d'un missile 2 pourvu d'un tel ensemble d'équilibrage 1 est réalisé à l'aide d'un procédé d'équilibrage précisé ci-dessous, en référence aux figures 5 et 6, en utilisant un banc d'équilibrage 18.

Le banc d'équilibrage 18 comporte :
- un plateau 19 permettant de recevoir le missile 2 et comprenant des moyens de mise en rotation (non représentés) permettant d'assurer la rotation du missile de 90° autour de son axe longitudinal (l'axe X) ;
- trois unités de mesure 20 (ou capteurs de poids (balances)) positionnées en triangle sous le plateau 19, dont seulement deux sont visibles sur les figures 5 et 6, qui permettent de peser chacune l'ensemble formé du plateau 19 et du missile 2 ; et
- une unité de calcul 21 permettant d'analyser les valeurs mesurées par les trois unités de mesure 20 et reçues via des liaisons 22.

Avant de commencer le procédé d'équilibrage, les bagues d'équilibrage 4A et 4B sont positionnées dans une position angulaire connue et identique à chaque fois. Cette position est une donnée d'entrée de l'unité de calcul 21.

Le procédé d'équilibrage comporte les étapes successives suivantes, représentées sur la figure 7 :
- une étape de mesure E1 consistant à placer le missile 2 sur le banc d'équilibrage 18 (pourvu des trois points de mesure munis chacun d'une unité de mesure 20) dans une première position P1, comme représenté sur la figure 5, et à mesurer, dans cette première position P1, à l'aide des unités de mesure 20, des premières valeurs de poids dudit missile 2, auxdits trois points de mesure. Pour l'étape de mesure E1, le missile 2 est par exemple positionné à plat sur le plateau 19, avec l'axe Z vers le bas ;
- une étape de mesure E2 consistant à tourner le missile de 90° sur le banc d'équilibrage 18, à l'aide de moyens de mise en rotation (non représentés), par rapport à la première position P1 pour l'amener dans une seconde position P2, et à mesurer, dans cette seconde position P2, comme représenté sur la figure 6, à l'aide des unités de mesure 20, des secondes valeurs de poids dudit missile 2 auxdits trois points de mesure. A l'étape de mesure E2, le missile 2 est donc soumis à une rotation de 90° autour de l'axe X et est positionné dans la même position axiale (suivant l'axe X) et sur le même plateau 19 qu'à l'étape de mesure E1 ;
- une étape de calcul E3 consistant à calculer, à l'aide de l'unité de calcul 21 liée auxdites unités de mesure 20 par l'intermédiaire des liaisons 22, à partir des premières et secondes valeurs de poids mesurées auxdites étapes de mesure E1 et E2, des coordonnées dans le plan transversal YZ du centre de gravité du missile 2 ;
- une étape de calcul E4 consistant à calculer, à partir des coordonnées du centre de gravité et de positions angulaires prédéterminées des deux bagues d'équilibrage 4A et 4B, pour chacune desdites bagues d'équilibrage 4A et 4B, une position angulaire de réglage, permettant de positionner le centre de gravité du missile 2 dans une zone prédéterminée dans le plan transversal YZ. De préférence, cette zone prédéterminée est centrée au niveau de la section transversale du missile, autour du point d'intersection entre l'axe longitudinal et cette section transversale ; et
- une étape de réglage E5 consistant à amener chacune des deux bagues équilibrage 4A et 4B dans sa position angulaire de réglage, ainsi calculée à l'étape de calcul E4.

Le procédé d'équilibrage comporte, de plus, une étape de vérification E6 mise en oeuvre après l'étape de réglage E5 et consistant à vérifier, en mettant en oeuvre les étapes de mesure E1 et E2 et les étapes de calcul E3 et E4, si le positionnement du centre de gravité est situé dans une zone prédéterminée dans le plan transversal YZ du missile, et dans la négative, à refaire un réglage.

On précise ci-après certaines des étapes précitées du procédé d'équilibrage.

À l'étape de calcul E3, l'analyse des valeurs de poids mesurées par chacune des trois unités de mesure 20 à l'étape de mesure E1 permet d'obtenir la coordonnée y du centre de gravité du missile 2 suivant l'axe Y.

De plus, à cette étape de calcul E3, l'analyse des valeurs de poids mesurés par chacune des trois unités de mesure 20 à l'étape de mesure E2 permet d'obtenir la coordonnée z du centre de gravité du missile 2 suivant l'axe Z.

Ces différents résultats sont ensuite combinés de manière à obtenir les coordonnées du centre de gravité du missile 2 selon les axes Y et Z, qui sont donc respectivement : y et z.

À l'étape de calcul E4, la distance entre, d'une part, la position du centre de gravité dans le plan transversal YZ et, d'autre part, l'axe X, est calculée, et elle est comparée à une distance maximale acceptable.

En fonction du résultat de cette comparaison :
- si la distance calculée est inférieure ou égale à ladite distance maximale acceptable, on arrête le procédé de réglage, le centre de gravité étant correctement positionné ; et
- si la distance calculée est supérieure à cette distance maximale acceptable, on met en oeuvre l'étape de réglage E5.

A cet effet, l'unité de calcul 21 calcule, à l'étape de calcul E4, la distance et la direction dans laquelle il faut déplacer le centre de gravité du missile 2 pour que sa distance par rapport à l'axe X se réduise et devienne acceptable (c'est-à-dire inférieure à ladite distance maximale acceptable).

Connaissant la position angulaire initiale des bagues d'équilibrage 4A et 4B, et les caractéristiques physiques de celles-ci (géométrie, masse, position de leur centre de gravité, discrétisation (pas) du réglage angulaire), l'unité de calcul 21 calcule ensuite la rotation qu'il faut appliquer à chacune d'elles pour déplacer le centre de gravité du missile 2 à une distance acceptable de l'axe X.

Comme chaque bague d'équilibrage est graduée angulairement sur sa périphérie, et que chaque graduation est visible depuis l'extérieur du missile, il est ensuite aisé lors de l'étape de réglage E5 de déplacer angulairement les bagues d'équilibrage 4A et 4B conformément aux résultats obtenus à l'étape de calcul E4.

Cette opération peut être réalisée manuellement par un opérateur grâce à un outil de type stylet, ou de manière automatisée, comme précisé ci-dessous.

Une fois les bagues d'équilibrage 4A et 4B positionnées angulairement conformément aux résultats des calculs obtenus à l'étape de calcul E4, on vérifie à l'étape de vérification E6 si le procédé d'équilibrage a bien été efficace. Si le réglage est correct, on fixe les bagues d'équilibrage 4A et 4B angulairement en agissant depuis l'extérieur du missile 2, avec les moyens de fixation 10 tels que des agrafes 11, des vis ou des pions qui sont insérés dans les trous 12 des bagues d'équilibrage 4A et 4B. Si le réglage n'est pas correct, on refait les étapes précitées.

On peut envisager que le réglage angulaire de la position des bagues d'équilibrage 4A et 4B soit effectué manuellement, ou de manière automatisée et robotisée. Dans ce dernier cas, le banc d'équilibrage 18 doit donc être complètement automatisé, et tous les éléments de ce banc d'équilibrage 18 doivent être configurés pour réaliser leurs fonctions respectives de façon automatique. En réalisant le réglage angulaire de la position des bagues d'équilibrage de manière automatisée, on est en mesure de minimiser le temps passé par le missile en cellule pyrotechnique, ce qui génère un gain de coût, et le réglage peut se faire sans opérateur dans la cellule pyrotechnique, ce qui est avantageux en terme de sécurité.

La présente invention permet donc :
- d'équilibrer statiquement un missile 2 sans disperser son centrage longitudinal ni sa masse, donc sans disperser ses performances ; et
- de procéder à l'équilibrage du missile 2 en toute fin d'intégration du missile (donc sur le missile complet), ce qui permet de limiter la durée du procédé d'équilibrage et donc de la production du missile.

## Revendications

1. Missile,
**caractérisé en ce qu'**il est pourvu d'un ensemble d'équilibrage comportant deux bagues d'équilibrage (4A, 4B) destinées à être montées sur le missile (2), chacune desdites bagues d'équilibrage (4A, 4B) comportant un lest (5A, 5B) qui est localisé sur la bague d'équilibrage (4A, 4B) correspondante, chacune desdites bagues d'équilibrage (4A, 4B) étant apte à être entraînée en rotation et à être fixée dans une position angulaire donnée, et **en ce que** les bagues d'équilibrage (4A, 4B) dudit ensemble d'équilibrage (1) sont montées sur le missile (2) coaxialement à un axe longitudinal (L - L) dudit missile (2) de manière à pouvoir être entraînées en rotation autour de cet axe longitudinal (L - L).

2. Missile selon la revendication 1,
**caractérisé en ce que** chacune desdites bagues d'équilibrage (4A, 4B) comporte un anneau (6) réalisé en un premier matériau présentant une première densité, et **en ce que** le lest (5A, 5B) est intégré dans cet anneau (6) et est réalisé en un second matériau présentant une seconde densité qui est supérieure à ladite première densité.

3. Missile selon la revendication 2,
**caractérisé en ce que**, pour chacune desdites bagues d'équilibrage (4A, 4B), le lest (5A, 5B) est intégré dans un tronçon en arc de cercle de l'anneau (6).

4. Missile selon l'une des revendications 2 et 3,
**caractérisé en ce que** le lest (5A, 5B) est fixé dans l'anneau (6).

5. Missile selon l'une quelconque des revendications précédentes,
**caractérisé en ce que** ledit lest (5A, 5B) comporte de la grenaille (9) qui est enrobée dans une résine (17).

6. Missile selon l'une quelconque des revendications précédentes,
**caractérisé en ce que** chacune desdites bagues d'équilibrage (4A, 4B) est pourvue d'une graduation angulaire (7) périphérique, ledit lest (5A, 5B) étant agencé à une position angulaire donnée par rapport à ladite graduation angulaire (7).

7. Missile selon la revendication 6,
**caractérisé en ce que** les deux bagues d'équilibrage (4A, 4B) sont agencées coaxialement, l'une à côté de l'autre avec leurs graduations angulaires (7) se faisant face.

8. Missile selon l'une quelconque des revendications précédentes,
**caractérisé en ce que** chacune desdites bagues d'équilibrage (4A, 4B) est pourvue d'un ensemble de trous de réglage (8) répartis autour de la périphérie de l'anneau (6) correspondant.

9. Missile selon l'une quelconque des revendications 1 à 8,
**caractérisé en ce que** l'ensemble d'équilibrage (1) est monté sur une face (13) du missile (2), radialement externe par rapport à l'axe longitudinal (L - L) dudit missile (2).

10. Missile selon l'une quelconque des revendications 1 à 8,
**caractérisé en ce que** l'ensemble d'équilibrage (4A, 4B) est monté à l'intérieur d'une structure externe (14) du missile (2), ladite structure externe (14) étant pourvue d'au moins une fenêtre (15, 16) permettant d'accéder de l'extérieur à au moins une partie de chacune des bagues d'équilibrage (4A, 4B).

11. Missile selon l'une quelconque des revendication 9 à 11,
**caractérisé en ce qu'**il comporte des moyens de fixation (10) configurés pour immobiliser en rotation chacune desdites bagues d'équilibrage (4A, 4B) dans une position angulaire donnée.

12. Procédé d'équilibrage d'un missile tel que celui spécifié sous l'une quelconque des revendications 1 à 11,
**caractérisé en ce qu'**il comporte les étapes successives suivantes :
- une première étape de mesure (E1) consistant à placer le missile (2) sur un banc d'équilibrage (18) pourvu de trois points de mesure, dans une première position (P1), et à mesurer, dans cette première (P1) position, des premières valeurs de poids dudit missile (2) mesurées respectivement auxdits trois points de mesure ;
- une seconde étape de mesure (E2) consistant à tourner le missile (2) de 90° autour de son axe longitudinal (L - L) par rapport à la première position (P1) pour l'amener dans une seconde position (P2) sur le banc d'équilibrage (18), et à mesurer, dans cette seconde position (P2), des secondes valeurs de poids dudit missile (2) mesurées respectivement auxdits trois points de mesure ;
- une première étape de calcul (E3) consistant à calculer, à partir des premières et secondes valeurs de poids mesurées auxdites première et seconde étapes de mesure (E1, E2), des coordonnées dans un plan transversal du centre de gravité du missile(2) ;
- une deuxième étape de calcul (E4) consistant à calculer, à partir des coordonnées du centre de gravité et de positions angulaires prédéterminées des deux bagues d'équilibrage (4A, 4B), pour chacune desdites bagues d'équilibrage (4A, 4B) une position angulaire de réglage, permettant de positionner le centre de gravité dans une zone prédéterminée dans le plan transversal ; et
- une étape de réglage (E5) consistant à amener chacune des deux bagues équilibrage (4A, 4B) dans sa position angulaire de réglage ainsi calculée.

13. Procédé selon la revendication 12,
**caractérisé en ce qu'**il comporte, de plus, une étape de vérification (E6) mise en oeuvre après l'étape de réglage (E5) et consistant à vérifier, en mettant en oeuvre les première et seconde étapes de mesure (E1, E2) et les première et seconde étapes de calcul (E3, E4), si le positionnement du centre de gravité est effectivement situé dans une zone prédéterminée dans un plan transversal du missile (2), et dans la négative, à refaire un réglage en mettant en oeuvre l'étape de réglage (E5).

14. Procédé selon l'une des revendications 12 et 13,
**caractérisé en ce que** lesdites étapes du procédé sont mises en oeuvre de façon automatique.

## Patentansprüche

1. Rakete,
**dadurch gekennzeichnet, dass** sie mit einer Auswuchtanordnung versehen ist, die zwei Auswuchtringe (4A, 4B) umfasst, die dazu bestimmt sind, auf der Rakete (2) montiert zu werden, wobei jeder der Auswuchtringe (4A, 4B) einen Ballast (5A, 5B) umfasst, der sich auf dem entsprechenden Auswuchtring (4A, 4B) befindet, wobei jeder der Auswuchtringe (4A, 4B) geeignet ist, um gedreht und in einer gegebenen Winkelstellung befestigt zu werden, und dadurch, dass die Auswuchtringe (4A, 4B) der Auswuchtanordnung (1) koaxial zu einer Längsachse (L - L) der Rakete (2) so auf der Rakete (2) montiert sind, dass sie um diese Längsachse (L - L) herum gedreht werden können.

2. Rakete nach Anspruch 1,
**dadurch gekennzeichnet, dass** jeder der Auswuchtringe (4A, 4B) einen Ring (6) umfasst, der aus einem ersten Material ausgeführt ist, das eine erste Dichte aufweist, und dadurch, dass der Ballast (5A, 5B) in diesem Ring (6) integriert ist und aus einem zweiten Material ausgeführt ist, das eine zweite Dichte aufweist, die größer ist als die erste Dichte.

3. Rakete nach Anspruch 2,
**dadurch gekennzeichnet, dass** bei jedem der Auswuchtringe (4A, 4B) der Ballast (5A, 5B) in einem Kreisbogenabschnitt des Rings (6) integriert ist.

4. Rakete nach einem der Ansprüche 2 und 3,
**dadurch gekennzeichnet, dass** der Ballast (5A, 5B) im Ring (6) befestigt ist.

5. Rakete nach einem der vorstehenden Ansprüche,
**dadurch gekennzeichnet, dass** der Ballast (5A, 5B) Schrot (9) umfasst, das in einem Harz (17) eingebettet ist.

6. Rakete nach einem der vorstehenden Ansprüche,
**dadurch gekennzeichnet, dass** jeder der Auswuchtringe (4A, 4B) mit einer umfangsmäßigen Winkelskala (7) versehen ist, wobei der Ballast (5A, 5B) in Bezug auf die Winkelskala (7) an einer gegebenen Winkelstellung angeordnet ist.

7. Rakete nach Anspruch 6,
**dadurch gekennzeichnet, dass** die zwei Auswuchtringe (4A, 4B) koaxial nebeneinander mit ihren Winkelskalen (7) einander zugewandt angeordnet sind.

8. Rakete nach einem der vorstehenden Ansprüche,
**dadurch gekennzeichnet, dass** jeder der Auswuchtringe (4A, 4B) mit einer Anordnung Justierbohrungen (8) versehen ist, die um den Umfang des entsprechenden Rings (6) herum verteilt sind.

9. Rakete nach einem der Ansprüche 1 bis 8,
**dadurch gekennzeichnet, dass** die Auswuchtanordnung (1) auf einer in Bezug auf die Längsachse (L - L) der Rakete (2) radial außenliegenden Seite (13) der Rakete (2) montiert ist.

10. Rakete nach einem der Ansprüche 1 bis 8,
**dadurch gekennzeichnet, dass** die Auswuchtanordnung (4A, 4B) im Inneren einer außenliegenden Struktur (14) der Rakete (2) montiert ist, wobei die außenliegende Struktur (14) mit mindestens einem Fenster (15, 16) versehen ist, das es ermöglicht, von der Außenseite her auf mindestens einen Teil jedes der Auswuchtringe (4A, 4B) zuzugreifen.

11. Rakete nach einem der Ansprüche 9 bis 11,
**dadurch gekennzeichnet, dass** sie Befestigungsmittel (10) umfasst, die dafür konfiguriert sind, um jeden der Auswuchtringe (4A, 4B) in einer gegebenen Winkelstellung drehfest zu immobilisieren.

12. Verfahren zum Auswuchten einer Rakete wie jenem, der in einem der Ansprüche 1 bis 11 spezifiziert ist,
**dadurch gekennzeichnet, dass** es die folgenden aufeinanderfolgenden Schritte umfasst:
- einen ersten Messschritt (E1), der darin besteht, die Rakete (2) in einer ersten Stellung (P1) auf einer mit drei Messpunkten versehenen Auswuchtbank (18) zu platzieren, und in dieser ersten (P1) Stellung erste Gewichtswerte der Rakete (2) zu messen, die jeweils an den drei Messpunkten gemessen werden;
- einen zweiten Messschritt (E2), der darin besteht, die Rakete (2) in Bezug auf die erste Stellung (P1) 90° um seine Längsachse (L - L) zu drehen, um sie auf der Auswuchtbank (18) in eine zweite Stellung (P2) zu bringen, und in dieser zweiten Stellung (P2) zweite Gewichtswerte der Rakete (2) zu messen, die jeweils an den drei Messpunkten gemessen werden;
- einen ersten Rechenschritt (E3), der darin besteht, auf Grundlage der ersten und zweiten Gewichtswerte, die beim ersten und zweiten Messschritt (E1, E2) gemessen wurden, Koordinaten des Schwerpunkts der Rakete (2) in einer Querebene zu berechnen;
- einen zweiten Rechenschritt (E4), der darin besteht, auf Grundlage der Koordinaten des Schwerpunkts und von vorbestimmten Winkelstellungen der zwei Auswuchtringe (4A, 4B) für jeden der Auswuchtringe (4A, 4B) eine Justierwinkelstellung zu berechnen, die es ermöglicht, den Schwerpunkt in einem vorbestimmten Bereich in der Querebene zu positionieren; und
- einen Justierschritt (E5), der darin besteht, jeden der zwei Auswuchtringe (4A, 4B) in seine so berechnete Justierwinkelstellung zu bringen.

13. Verfahren nach Anspruch 12,
**dadurch gekennzeichnet, dass** es weiter einen Verifizierschritt (E6) umfasst, der nach dem Justierschritt (E5) umgesetzt wird und darin besteht, unter Umsetzung des ersten und zweiten Messschritts (E1, E2) und des ersten und zweiten Rechenschritts (E3, E4) zu verifizieren, ob die Positionierung des Schwerpunkts tatsächlich in einem vorbestimmten Bereich in einer Querebene der Rakete (2) liegt, und falls nicht, eine Justierung unter Umsetzung des Justierschritts (E5) zu wiederholen.

14. Verfahren nach einem der Ansprüche 12 und 13,
**dadurch gekennzeichnet, dass** die Schritte des Verfahrens auf automatische Weise umgesetzt werden.

## Claims

1. Missile,
**characterised in that** it is provided with a balancing device comprising two balancing rings (4A, 4B) intended to be mounted on the missile (2), each of said balancing rings (4A, 4B) comprising a ballast (5A, 5B) which is located on the corresponding balancing ring (4A, 4B), each of said balancing rings (4A, 4B) being able to be rotationally driven and to be secured in a given angular position, and **in that** the balancing rings (4A, 4B) of said balancing device (1) are mounted on said missile (2) coaxially with a longitudinal axis (L - L) of said missile (2), so as to be able to be rotationally driven about this longitudinal axis (L-L).

2. Missile according to claim 1,
**characterised in that** each of said balancing rings (4A, 4B) comprises a ring (6) made of a first material with a first density, and **in that** the ballast (5A, 5B) is integrated in the ring (6) and is made of a second material with a second density that is higher than said first density.

3. Missile according to claim 2,
**characterised in that**, for each of said balancing rings (4A, 4B), the ballast (5A, 5B) is integrated in a circular arc segment of the ring (6).

4. Missile according to one of claims 2 and 3,
**characterised in that** the ballast (5A, 5B) is secured inside the ring (6).

5. Missile according to any of the preceding claims,
**characterised in that** said ballast (5A, 5B) is made of shot material (9) which is coated in a resin (17).

6. Missile according to any of the preceding claims,
**characterised in that** each said balancing ring (4A, 4B) is provided with a peripheral angular graduation (7), said ballast (5A, 5B) being arranged at a given angular position with respect to said angular graduation (7).

7. Missile according to claim 6,
**characterised in that** the two balancing rings (4A, 4B) are arranged coaxially, next to one another, with the angular graduations (7) thereof facing one another.

8. Missile according to any of the preceding claims,
**characterised in that** each of said balancing rings (4A, 4B) is provided with a plurality of adjustment holes (8) distributed around the periphery of the corresponding ring (6).

9. Missile according to any of claims 1 to 8,
**characterised in that** the balancing device (1) is mounted on a face (13) of the missile, radially external with respect to the longitudinal axis (L - L) of said missile (2).

10. Missile according to any of claims 1 to 8,
**characterised in that** the balancing device (4A, 4B) is mounted inside an external structure (14) of the missile (2), said external structure (14) being provided with at least one window (15, 16) making it possible to access from the outside, at least one part of each of the balancing rings (4A, 4B).

11. Missile according to any of claims 9 to 11,
**characterised in that** it comprises securing means (10) configured to rotationally immobilise each of said balancing rings (4A, 4B) in a given angular position.

12. Method for balancing a missile such as that specified in any of claims 1 to 11,
**characterised in that** it comprises the following successive steps:
- a first measurement step (E1) consisting of placing the missile (2) on a balance test bench (18) provided with three measurement points, in a first position (P1) and measuring, in this first position (P1), the first weight values of said missile (2), measured respectively at said three measurement points;
- a second measurement step (E2) consisting of rotating the missile (2) by 90° about the longitudinal axis (L - L) thereof with respect to the first position (P1) thereof to bring it to a second position (P2) on the balance test bench (18) and measuring, in this second position (P2), the second weight values of said missile (2), measured respectively at said three measurement points;
- a first calculation step (E3) consisting of calculating, from the first and second weight values measured at said first and second measurements steps (E1, E2) the coordinates in a plane transversal of the centre of gravity of the missile (2);
- a second calculation step (E4) consisting of calculating, from the coordinates of the centre of gravity and predetermined angular positions of the two balancing rings (4A, 4B), for each of said balancing rings (4A, 4B), an angular adjustment position, making it possible to position the centre of gravity in a predetermined area of the transversal plane; and
- a setting step (E5) consisting of bringing each of the two balancing rings (4A, 4B) to the thus calculated angular setting position thereof.

13. Method according to claim 12,
**characterised in that** it further comprises a verification step (E6) implemented after the setting step (E5) and consisting of verifying, by implementing the first and second measurement steps (E1, E2) and the first and second calculation steps (E3, E4), whether the positioning of the centre of gravity is actually located in the predetermined area of the transversal plane of the missile (2), and, if it is not, repeating a setting by implementing the setting step (E5).

14. Method according to one of claims 12 and 13,
**characterised in that** said steps of the method are automatically implemented.
